(19) Europäisches Patentamt / European Patent Office / Office européen des brevets

(11) **EP 4 407 566 A1**

(12) **EUROPEAN PATENT APPLICATION**

(43) Date of publication:
**31.07.2024 Bulletin 2024/31**

(21) Application number: **23153603.8**

(22) Date of filing: **27.01.2023**

(51) International Patent Classification (IPC):
*G06V 10/25* (2022.01)    *G06V 20/69* (2022.01)

(52) Cooperative Patent Classification (CPC):
**G06V 10/25; G06V 20/698**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mindpeak GmbH
20359 Hamburg (DE)**

(72) Inventors:
• **Lang, Dr. Tobias
20359 Hamburg (DE)**
• **Päpper, Marc
20257 Hamburg (DE)**
• **Kostel, Serhii
22609 Hamburg (DE)**

(74) Representative: **Meissner Bolte Partnerschaft mbB
Patentanwälte Rechtsanwälte
Postfach 86 06 24
81633 München (DE)**

(54) **A COMPUTER-IMPLEMENTED METHOD FOR SELECTING REGIONS OF INTEREST, A RESPECTIVE COMPUTER-READABLE MEDIUM AND SYSTEM**

(57)    Selecting relevant regions of interest in a digital for pathological analysis is difficult due to the amount of data and possible different regions of interest that could be generated. This object is solved by a computer-implemented method for selecting regions of interest, ROIs, in a digital image for pathological analysis, the method comprising:
• Receiving cell data indicating the locations of a plurality of cells in the digital image, in particular in the WSI;
• For each cell location of the plurality of cells, generating at least one ROI, the at least one ROI for each cell together defining a first set of ROIs, each ROI of the first set comprising the cell locations in a predefined vicinity of the respective cell;
• For each ROI in the first set, determining of at least one ROI score which indicate/s the relevance of the respective ROI;
• Removing ROIs from the first set which do not fulfil at least one filtering condition;
• Selecting a second set of ROIs from the first set based on the determined at least one ROI score.

Fig. 1

**Description**

The present disclosure concerns a computer-implemented method for selecting regions of interest, a respective computer-readable medium and a system.

The current practice in pathology to examine a cell or tissue sample, i.e. from a biopsy or a cytological sample, is manual. The standard of care to assess and define the status of a disease, e.g. cancer, is conducted using microscopic analysis. For this, a doctor takes a biopsy or a cytology smear and sends it to a pathologist for diagnosis. In the pathological laboratory, the biopsy tissue is cut into thin slices while the cells of a cytological smear are attached to the slide. Each slide is stained with dyes such as haematoxylin and eosin stain, also referred to as H&E stain. Using such dyes, the morphology of the cells is made visible. Often, the more complex method of immunohistochemical (IHC) staining is performed, in which antibodies are used to bind on antigens in the tissue sample. In this application, the antigens serve as biomarkers. One of the most well-known biomarkers is Ki67. The antibodies can be linked to a dye. After the antibodies bind to the antigen in the tissue or cell sample, the dye is activated, and the antigen can then be seen under a microscope. Immunohistochemistry is used to help diagnose diseases, such as cancer. It is further used to help to tell the difference between different types and stages of cancer and establishes the ground for treatment decisions.

Manually analyzing the slides is a time-consuming and repetitive work, which despite its frequency, remains demanding and error-prone, even for experts. Furthermore, keeping the same quality of standard between a plurality of slides and readers is a challenge and can often not be achieved by manual analysis. If the quality of analysis is insufficient, wrong treatment decisions can be made, which lead to insufficient patient care.

Therefore, there is a need to automate the aforementioned analysis and to ensure a high quality standard and increase reproducibility across all slides analyzed. Given the complexity of the task, conventional systems that rely on traditional computer vision methods and manually defined rules, are insufficient to achieve the desired levels of quality. Instead, methods of artificial intelligence are of particular interest to solve this problem. Methods of artificial intelligence and in particular deep learning from the state of the art of image recognition are used industrially from autonomous driving to face recognition and e-commerce. Instead of setting fixed coded rules by human experts, an artificial intelligence system learns statistical patterns from sample data. As there has been a significant improvement in the quality of image recognition, this field has gained interest in medicine, especially in pathology.

Therefore, automated image recognition using artificial intelligence systems is becoming increasingly important in pathological diagnostics.

To automatically analyze stained slices of tissue, scanners are used that can digitize large quantities of glass tissue slides that contain the tissue to be analyzed. It is already known to perform the analysis of the slides based on digital images that are reproduced by the scanners using conventional systems using computer vision methods. A scanned version of a glass slide with tissue samples is also referred to as a whole slide image (WSI). It is further known to automatically analyze the WSIs with an artificial intelligent system. One such system is described in the European Patent Application EP 22 192 410. In said publication it is described how the exact number of biomarker positive and biomarker negative cells can be counted for a whole slide image. Thus, the locations of the biomarker positive and biomarker negative cells are known. However, for a pathologist to make a correct diagnosis, groups of cells need to be analyzed. In particular, pathologists traditionally select regions of interest that contain at least a predetermined number of biomarker positive cells. As mentioned, the determination of a region of interest was traditionally conducted manually by a pathologist following specific guidelines. International guidelines, for example, recommend that a region of interest needs to contain at least 500 cells.

In order to further enhance the automatic processing of whole slide images and therefore increase the productivity of doctors, automatic systems to create these regions of interest are of particular importance. Furthermore, automatic systems may produce regions of interest in a more reliable fashion, such that the requirements of the respective guidelines are fulfilled which results in a reliable decision basis for the pathologist.

It is therefore an object of the present disclosure to improve the analysis of digital images, in particular whole slide images. In particular, it is an object of the present invention to automatically provide regions of interest for a digital image. It is preferably an object of the present invention to automate the creation of the regions of interest. It is further in particular an object of the present invention to produce a predetermined number of regions of interest for a digital image.

The object of the invention is solved by the subject-matter of the independent claims. In particular, the object is solved by a computer-implemented method for selecting regions of interest, ROIs, in a digital image, in particular in a whole slide image, WSI, for pathological analysis, the method comprising:

- Receiving cell data indicating locations of a plurality of cells, in particular of biomarker positive and biomarker negative cells, in the digital image, in particular in the WSI;

- For each cell location of the plurality of cells, generating at least one ROI, the at least one ROI for each cell together defining a first set of ROIs, each ROI of the first set comprising the cell locations in a predefined vicinity of the respective cell;

- For each ROI in the first set, determining of at least one ROI score which indicates the relevance of the respective ROI;

- Removing ROIs from the first set which do not fulfill at least one filtering condition;

- Selecting a second set of ROIs from the first set based on the determined at least one ROI score.

A core of the present invention is the generation of a first set of ROIs, which may contain a big number of ROIs. In the subsequent steps, this number is further reduced until a second set of ROIs is selected from the first set, which subsequently may be presented to a pathologist using this method. Thus, the described method is a very efficient way to generate ROIs, which follow specific requirements.

The digital images, in particular the WSIs, can be received in a data format indicating an image, for example a TIFF format. The digital images each indicate a slide-containing tissue. The resolution of such images may be of up to 200,000 pixels times 100,000 pixels or more. The resolution of such images may be such that 0.25, 0.5 or 1 $\mu$m are shown per pixel. Such digital images are in some embodiments scanned by at least one scanner system and provided by an image management system, which may be adapted to store the digital image in a data storage. Moreover, in one embodiment, the digital images can be accessed using a read library, i.e. an application programming interface (API) used to access all or certain parts of that image, optionally in a specific resolution. In one embodiment, the digital images can be implemented as WSIs, indicating an entire slide. Still, in other embodiments, a digital image may indicate only a part or multiple parts of a scanned slide.

In one embodiment, the locations of the cells, in particular of the biomarker positive and biomarker negative cells, may be pixel coordinates, for example in a coordinate system of the digital image. Even further, in one embodiment, the location of a cell may indicate a cell center of a particular cell.

In one embodiment, the digital image may comprise cell-type data associated with a cell location, the cell-type data indicating whether the cell location indicates a biomarker positive or biomarker negative cell.

In one embodiment, a ROI may indicate a geometric shape, for example a circle, a rectangle, an oval, and/or an arbitrary polygon. Each ROI may, in one embodiment, indicate its own shape, i.e. not all ROIs in the first set or the second set need to be of the same shape.

Using geometric shapes to define the ROIs provides an efficient means for data storage. For example, a circle may be defined by the center of the circle and the radius. This allows for an overall more efficient processing.

In one embodiment, the predefined vicinity of the cell may indicate a distance in pixels. In an alternative embodiment, the predefined vicinity may be indicated as a distance, e.g. in centimeters, wherein the resolution, i.e. the dots per inch, of the digital image need to be known. The resolution may be part of the digital image.

In one embodiment, the method may be characterized in that the removing of the ROIs from the first set may be based on the at least one ROI score, in particular comprising the removing of ROIs with at least one ROI score outside a normal distribution according to the Three Sigma Rule, in particular wherein the at least one filtering condition may indicate compliance with the Three Sigma Rule.

The Three Sigma Rule refers to an empirical rule, which may be applied when a dataset indicates a normal or Gaussian probability distribution. In such a case, the Three Sigma Rule states that approximately 99.7 percent of the results are within a three sigma interval around the mean of the distribution. The "sigma" indicates the standard deviation. Thus, with the aforementioned embodiment, ROIs are removed from the first set that have at least one ROI score which is significantly different from the remaining ROI scores for the ROIs in the first set. Using the aforementioned embodiment, it is possible to exclude ROIs that are potentially based on false data classification providing more precise results.

The at least one filtering condition may, in one embodiment, indicate a logical test. In particular, the at least one filtering condition may indicate that the at least one ROI score of the respective ROI is within the three sigma interval around the mean of the normal distribution of the at least one ROI score.

In one embodiment, the method may comprise a removing of all cell locations from the cell data, which are located within a predetermined vicinity, e.g. within less than 10,000 pixels, less than 1,000 pixels, or less than 500 pixels, of a tissue border, in particular prior to the generating of the at least one ROI for each cell.

Experiments have shown that the processing of the tissue slides may result in faulty or incorrect data at a tissue border, leading to incorrect or imprecise classifications of cells, for example into biomarker positive and biomarker negative cells. Therefore, it is advantageous to remove those parts of the digital image prior to generating the at least one ROI for each cell and thus prior generating the first set. Thus, removing the respective cell locations results in a more robust and more reliable generation of ROIs that are relevant to the pathologist.

In one embodiment, the determining of the at least one ROI score may comprise determining a positivity score indicating the fraction of biomarker positive tumor cells compared to a total number of tumor cells in the respective ROI.

With the above-described embodiment, the at least one ROI score may comprise the positivity score. The positivity score indicates whether an ROI comprises many biomarker positive tumor cells relative to the total number of tumor cells. Thus, the positivity score already provides a strong indication whether the ROI is of significant relevance for a diagnosis and should be presented to the pathologist for a diagnosis.

In one embodiment, the at least one filtering condition may indicate a test whether the positivity score of an ROI is above a minimum positivity score threshold value, whereby the method may comprise a respective determination.

In one embodiment, the determining of the at least one ROI score may comprise a determining of an area size of the respective ROI, in particular measured in pixels of the digital image, wherein the area size preferably may indicate a diagonal of a bounding box around the respective ROI.

With the above-mentioned embodiment, it is possible to base the removing of the ROI from the first set also on the size of the ROI. Specifically, the at least one filtering condition may indicate a test for a minimum and/or maximum ROI size. A bounding box may be understood as the smallest rectangle comprising all cell locations in the respective ROI. Using a diagonal of this bounding box as the area size provides a very efficient means to test for compliance with the at least one filtering condition.

In one embodiment, the method may comprise:

- for each ROI of the first set, comparing the determined area size of the respective ROI with a size threshold value;

- removing, from the first set, ROIs that have a larger and/or equal area size than the size threshold value, in particular wherein the at least one filtering condition indicates a requirement for ROI's area size to be less or equal to the size threshold value.

In one embodiment, the determining of the at least one ROI score may comprise determining a cell density score which may indicate the density of cells in the ROI.

In one embodiment, the cell density score may be determined by calculating:

$$1-\text{area size of the respective ROI/max(area size of all ROIs in the first set)}.$$

This cell density score may indicate how the area size of one specific ROI compares to the largest ROI in the first set. With such an embodiment it is possible to have an at least one filtering condition which excludes or tests for ROIs that have a density score below or above a density score threshold value.

In one embodiment, the determining of the at least one ROI score may comprise determining a weighted combination of the determined positivity score and the determined cell density score of the respective ROI, wherein the selecting may be based, in particular only, on the weighted combination.

Instead of individually testing for compliance with one ROI score, a weighted combination of different ROI scores may be used. This ensures a more targeted exclusion of specific ROIs. Using a weighted combination of the positivity and cell density score, it is possible to provide a greater weight on one of the scores. For example, the weighted combination may indicate that the positivity score is multiplied by a factor, for example 0.7, and the cell density score is multiplied by a second factor, for example 0.3. To obtain the weighted combination, the two products may be added to obtain the score used for determining whether the ROI fulfills the at least one filtering condition.

In one embodiment, the method may comprise sorting the ROIs in the first set according to at least one ROI score, in particular according to the weighted combination of the determined positivity score and the determined cell density score of the respective ROI.

In one embodiment, the selecting of the second set of ROIs from the first set may comprise selecting only a predetermined number of ROIs from the first set of ROIs.

With the above-described embodiments it is further possible to select the most relevant ROIs from the first set for the second set. Specifically, when combined with the sorting of the ROIs, it is very efficient to select, for example, the first five ROIs from the first set, such that the five most relevant ROIs may be provided to a pathologist for further evaluation.

In one embodiment, the selecting of the second set from the first set may comprise selecting ROIs from the first set where the associated at least one ROI score is within a predetermined score value range.

Thus, also at the selecting of the second set, ROIs may be discarded if they do not fulfill respective requirements, such as lying within a predetermined score value range. The predetermined score value range, in one embodiment, may be also derived from the Three Sigma Rule.

In one embodiment, the generating of the at least one ROI for each cell may comprise selecting, in particular for each ROI in the first set, N-1 cell locations in the vicinity of the respective cell, in particular wherein N is greater or equal 100, greater or equal 200, greater or equal 300, greater or equal 400, greater or equal 500, or greater or equal 600.

To create the first set, it is in particular very efficient to generate ROIs by selecting N-1 cell locations in the vicinity of the respective cell. Thus, the method may iteratively go through all of the cells shown in the digital image, in particular the biomarker positive cells, and for each cell generate at least one ROI, which comprises N-1 cell locations. Using this approach, it is also possible to parallelize the generation of the ROIs for the first set such that the processing can be made very efficient.

In one embodiment, the removing of the ROIs from the first set may be based on the at least one ROI score, in particular wherein the at least one filtering conditions indicate a minimum ROI score, wherein the removing preferably comprises the step of comparing the respective ROIs score with an ROI score threshold value and for moving the ROI from the first set if it is determined that the respective ROI score is above or below the ROI score threshold value.

In one embodiment, the method may comprise displaying the second set of ROIs to a user on a display apparatus together with the digital image.

With this embodiment it is preferably possible that the pathologist may view the digital image together with the ROIs, in particular with the cells highlighted in the digital image, to conduct the diagnosis.

In one embodiment, the at least one filtering condition may indicate removing ROIs with at least one identical cell location, and/or without biomarker positive cells.

This embodiment provides further options how to remove ROIs from the first set. Thus, further options are provided how to ensure that only relevant ROIs remain in the first set for the selection. This embodiment provides even further advantages if performed prior computing any scores for the ROIs as the score computation can be eliminated for the removed ROIs.

The object of the present invention is further in particular solved by a computer-readable medium storing instructions that when executed by at least one processor causes the at least one processor to implement a method as described above.

The object of the present invention is further in particular solved by a system for selecting regions of interest, ROIs, in a digital image, in particular in a whole slide image, WSI, for pathological analysis, the system comprising:

- A communication unit adapted for receiving cell data indicating the locations of a plurality of cells, in particular of biomarker positive and biomarker negative cells, in the digital image, in particular in the WSI;
- An ROI generation unit adapted to, for each cell location of the digital image, generating at least one ROI, the at least one ROI for each cell together defining a first set of ROIs, each ROI of the first set comprising the cell locations in a predefined vicinity of the respective cell;
- An ROI analysis unit adapted to, for each ROI in the first set, to determine at least one ROI score, the at least one ROI score indicating the relevance of the respective ROI;
- An ROI filter unit adapted to remove ROIs from the first set which do not fulfill at least one filtering condition;
- A selection unit adapted to select a second set of ROIs from the first set based on the determined at least one ROI score.

It should be understood that the aforementioned method steps can all, or in any combination be executed by the system.

Similar or identical advantages arise from the alternative solutions to the object. Further embodiments are indicated by the dependent claims.

In the following, different embodiments are described with reference to the accompanying figures, wherein:

Fig. 1    shows a WSI with annotated data;
Fig. 2    schematically illustrates the marking process of WSIs;
Fig. 3    shows a WSI with regions of interest;
Fig. 4    shows a table with score data;
Fig. 5    shows a schematic of a system for selecting regions of interest;
Fig. 6    shows a flowchart of a method for selecting regions of interest;
Fig. 7    illustrates the area size computation of a region of interest;
Fig. 8    shows a flowchart for filtering regions of interest;
Fig. 9    shows a flowchart of a method for sorting ROIs;
Fig. 10   shows a flowchart of a method for selecting ROIs; and
Fig. 11   illustrates the Three Sigma Rule with a normal distribution.

In the following, like or similar objects are identified with the same reference numerals.

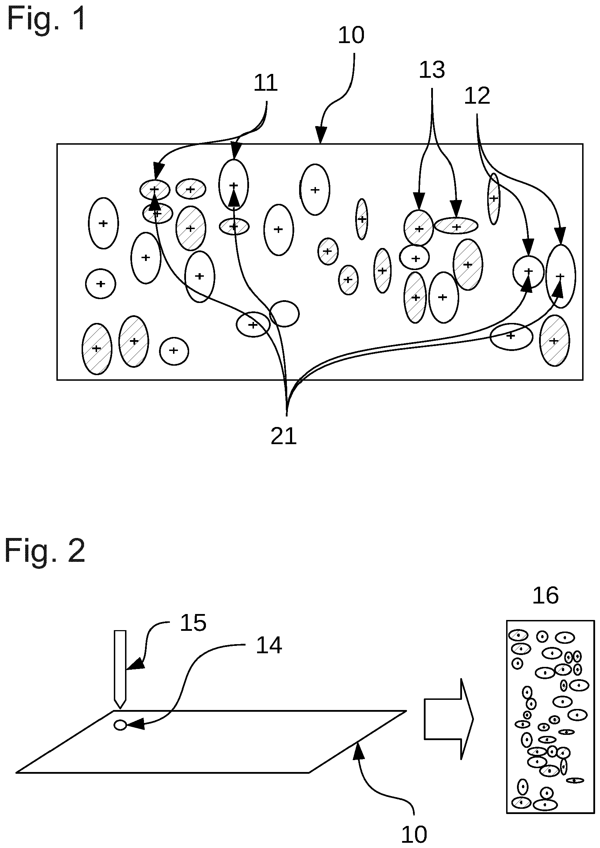

Fig. 1 shows a digital image 10. In the embodiment of Fig. 1, the digital image 10 is a whole slide image, WSI 10. It should be understood that the following description is not limited to WSIs 10 but can also be applied to any other type of digital image 10. The WSI 10 comprises a plurality of cells 12, 13. The WSI 10 is a digital representation of a slide that has a tissue sample or cells on it. This slide can be scanned by a scanner, which in turn produces the digital WSI 10. The WSI 10 can be stored as a TIFF image on a storage device. Moreover, the WSI can have a resolution of more than 100,000 times 200,000 pixels. To simplify accessing the WSI 10, a read library may be provided, which allows programmatically accessing WSI 10 in various resolutions. For example, the read library may indicate that the WSI 10 is provided with a resolution of, for example, 0.25 or 0.5 $\mu$m per pixel. Other resolutions are possible as well. In particular, accessing the WSI 10 may be made with respect to different degrees of magnification. Therefore, it is possible to access the WSI 10 with different degrees of detail.

The WSI 10 as shown in Fig. 1 comprises tumor cells 12 and 13. These tumor cells 12, 13 can be identified according to their shape, morphology and cell context. The preparation and staining of the slide is performed before the WSI 10 is scanned and digitized. Therefore, the WSI 10 already includes visual information on the structure and morphology of the tumor cells 12 and 13. Moreover, the tumor cells 12 and 13 can be categorized into two or more classes of tumor cells using a dye that stains e.g. the biomarker Ki67, PD-L1, HER2, or ER/PR (estrogen receptor/progesterone receptor), which is used to highlight cell growth. As an example, such biomarker may be used to identify a specific class of fast growing tumor cells in a WSI 10. Biomarker positive tumor cells 12 are marked with a dye, whereas biomarker negative tumor cells 13 remain unstained. Alternatively, other biomarkers can be used and the aforementioned example is not to be understood to limit the invention to the use of Ki67. In one embodiment, no immunohistochemical staining is performed and only cell locations are provided where the cells can be grouped into at least two classes of cells.

In the present embodiment, the number and distribution of biomarker stained tumor cells 12 are considered to be the decisive factors for a pathologist to make a diagnosis as well as choosing a suitable treatment against the tumor. To make such an assessment, regions of interest need to be identified that the pathologist can evaluate in more detail. These regions of interest are characterized by a large number of biomarker positive cells 12. In the present embodiment, it is further assumed that the whole slide image 10 is provided along with data on locations of the cells 12, 13. More specifically, the WSI 10 is provided along with cell data on the location of the cell centers 21 of the different cells 12, 13 shown in the WSI 10. Along with the location on the cell centers 21, the WSI 10 is provided along with data on whether the cell centers 21 indicate biomarker positive 12 or biomarker negative 13 cells, i.e. cell type data.

Fig. 2 is a systematic representation of the marking process to create the data for the WSI 10 either for direct use with the present invention, or to train an artificial intelligence system that automatically provides the required information for an unannotated whole slide image 10. The digital WSI 10 can be marked using a digital pen 15, such that the person conducting the manual marking can place the digital pen 15 into the cell center 14. As it is very difficult for a person to perfectly mark the cell center 14 with a digital pen 15, the present embodiment uses a Gaussian distribution to indicate the probability that the cell center 14 is the pixel as marked by the person conducting the marking process or a surrounding of that particular marked pixel. Using such an approach allows the creation of more data to be used for training of an artificial intelligent system. The output of the marking process is a WSI 10 containing the marked or labelled cells 16, which may be used as a training sample for an artificial intelligent system or for direct use with the present invention.

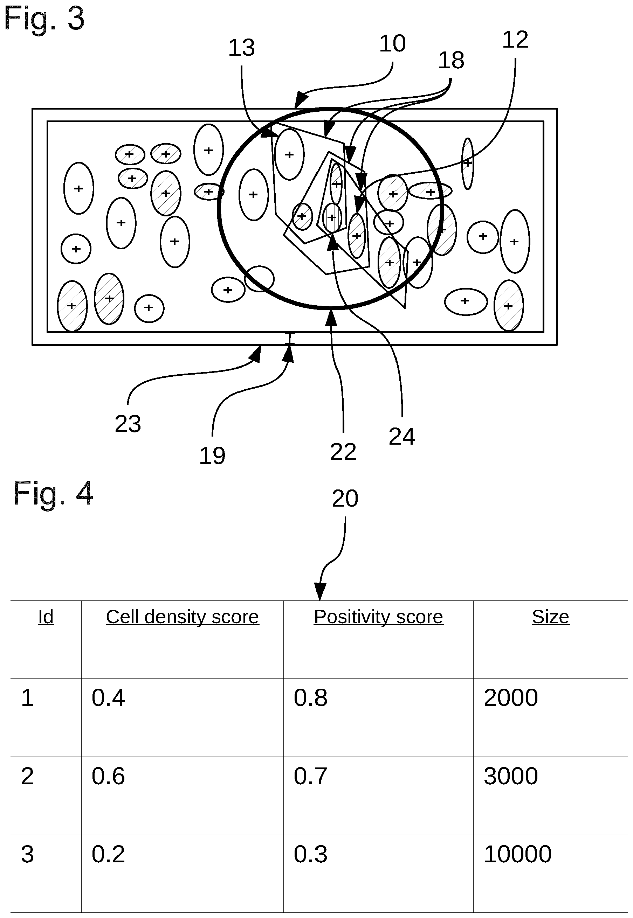

Fig. 3 is a WSI 10 for which a variety of regions of interest, ROI 18, have been created. Before creating the regions of interest 18, a vicinity of the tissue border 19 is cropped from the digital image 10. This cropping has the benefit that artifacts of the staining process are eliminated such that the creation of ROIs 18 is enhanced.

The process continues by iteratively repeating the following steps for each cell in the whole slide image 10. For the target cell 24, a vicinity of the target cell 22 is determined. Subsequently, at least one ROIs 18 is created that comprises cells 12, 13, which are arranged within the vicinity 22 of the target cell 24. The at least one ROI 18 is created such that a predetermined number N of cells 12, 13 are located within the respective ROI 18. As a result, N-1 cells 12, 13 are selected within the vicinity 22 of the target cell 24. The respective ROI 18 is defined on the one hand by the cells 12, 13 located within the ROI 18, and on the other hand by a polygon, which defines the area in which all the cells of the respective ROI 18 are located. In the next step, a cell density score and a positivity score as well as the area size of each ROI 18 is determined, which is explained in detail with respect to Fig. 4. In one embodiment, only one ROI 18 is created for each target cell 24.

Fig. 4 shows a table 20 with scoring data with different ROIs 18. The exemplary table 20 comprises a ROI ID column, a cell density score column, a positivity score column, as well as a size column. Therefore, each ROI 18 is associated with a row of table 20. For example, the first row of table 20 indicates that the ROI with an ID 1 has a cell density score of 0.4, a positivity score of 0.8 with an area size of 2,000. The positivity score is computed by calculating the fraction of biomarker positive tumor cells 12 compared to the total number of cells, i.e. biomarker positive and biomarker negative tumor cells, in the respective ROI 18. Thus, with respect to ROI ID 1, the positivity score of 0.8 indicates that 80 % of the cells in the ROI 18 are biomarker positive cells 12. The computation of the positivity score can also be generalized such that the fraction between a first group of cells relative to all cells in the respective ROI 18 is computed. Thus, the concept may be generalized to any groups of cells shown in a WSI. The cell density score indicates the density of cells in the ROI 18. Specifically, the cell density score is computed by calculating

1 – the area size of the respective ROI / maximum of the area size of all
ROIs in the first set.

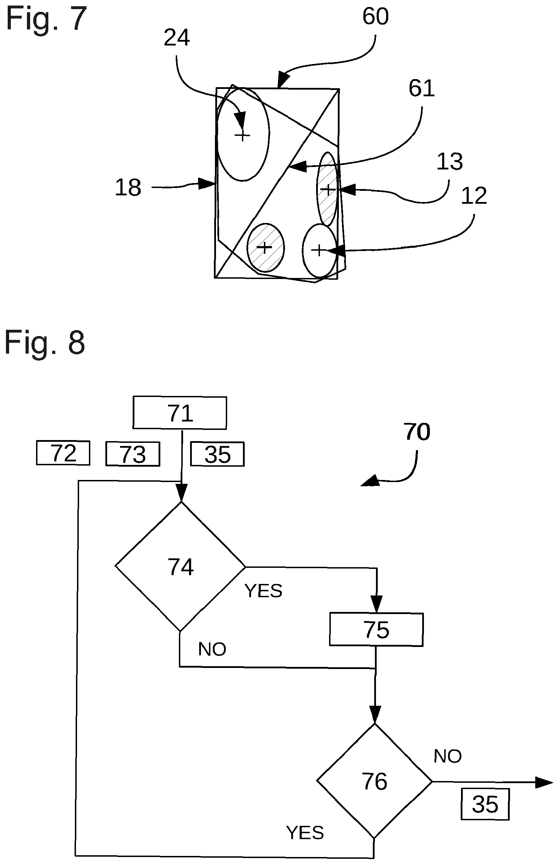

It is pointed out at this point, as already described with respect to Fig. 3, all ROIs are created with the same number of cells N. Therefore, a smaller size of an ROI 18 indicates a higher cell density relative to the other ROIs 18. Therefore, the cell density score is a relative measure measuring the differences between the different ROIs 18. The computation of the size will be explained in more detail with respect to Fig. 7.

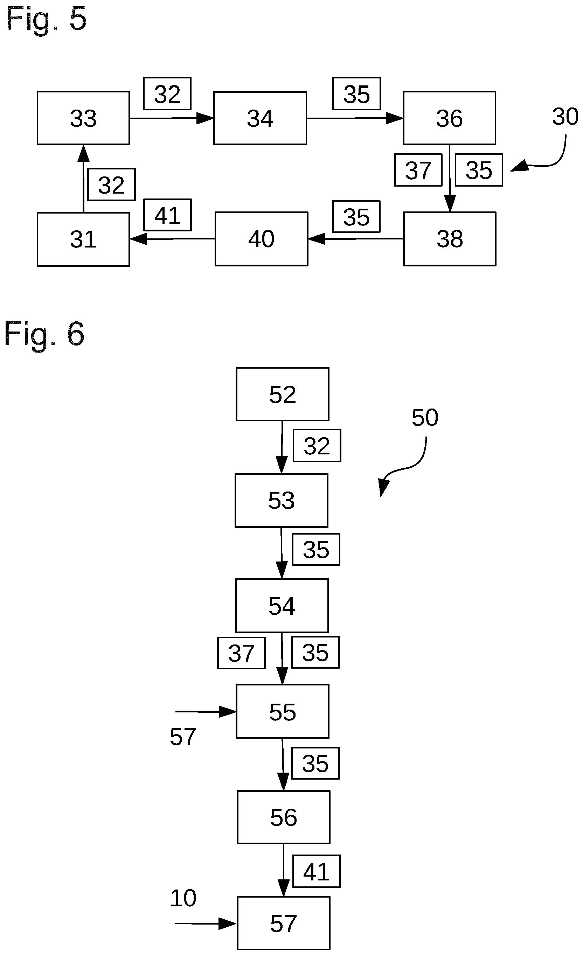

Fig. 5 shows an embodiment for a system 30 for selecting and displaying regions of interest 18. The system 30 comprises a user terminal 31. The user terminal 31 may be a personal computer or any other device that can be operated by a user. The user terminal 31 may comprise an input device as well as a display device to show the WSI 10 along with the ROIs 18. The user operating the user terminal 31 may access a web service over the Internet and provide cell data 32 to a communication unit 33. The cell data 32 may comprise the whole slide image 10 along with information on the location of the cell centers in the WSI 10 as well as the cell types, for example by an indication whether the different cell locations indicate biomarker positive or biomarker negative cells. The communication unit 33 is adapted to forward the cell data 32 to an ROI generation unit 34.

The ROI generation unit 34 is adapted to generate a plurality of ROIs for the WSI 10 included in the cell data 32. In particular, the ROI generation unit 34 creates ROIs 18 as described with respect to Fig. 3 for each cell indicated by the cell data 32. Preferably, the ROI generation unit 34 is executed or implemented using a server, which parallelizes the creation of the ROIs 18. As each cell can be handled independently from the other cells, this parallelization is easily achieved using the described method. After all ROIs 18 are generated for the provided cell data 32, the generated ROIs 18 are provided to an ROI analysis unit 36 as a first set of ROIs 35.

The ROI analysis unit 36 is adapted to, for each ROI 18 in the first set 35, to determine at least one ROI score 37. In one preferred embodiment, to determine the at least one ROI score 37 for each ROI 18 in the first set 35, the area size of each ROI 18 is determined. The computation of the area size for each ROI 18 can be done in parallel. After the area size computation finishes, a cell density score as well as a positivity score are computed for each ROI 18. Again, the computation of the cell density score and the positivity score may be conducted in parallel for all ROIs 18. Lastly, a weighted combination of the cell density score and the positivity score is computed as the ROI score 37 for each ROI 18. The ROI analysis unit 36 is further adapted to provide the ROI scores 37 for each ROI 18 in the first set 35 together with the first set 35 to an ROI filter unit 38.

The ROI filter unit 38 is adapted to remove ROIs 18 from the first set 35 which do not fulfill at least one filtering condition. The filtering condition can either be predefined or may also be provided by a user. For example, the ROI filter unit 38 may remove ROIs 18 from the first set 35, which have ROI scores 37 outside of an allowed range.

The ROI filter unit 38 then provides the filtered first set 35 to a selection unit 40. The selection unit 40 is adapted to select ROIs 18 from the first set 35 based on the ROI score 37. For example, the selection unit 40 may select the five ROIs with the highest scores. The selected ROIs 18 are provided to the user terminal 31 as a second set of ROIs 41. Thus, the user terminal 31 is adapted to overlay the selected ROIs 18 of the second set 41 over the whole slide image 10 which was initially provided. With this approach, a user, for example a pathologist, may conduct a diagnosis and make treatment decisions based on the information highlighted by the system 30.

Each of the components of the system 30 may be located on the same or different servers that may be connected using the internet. The communication may be conducted using standard communication internet protocols, e.g. the TCP/IP protocol suite.

Fig. 6 shows a flowchart of a computer-implemented method for selecting regions of interest. In a first receiving cell data step 52, the cell data 32 is received. The cell data 32 may have the same properties as explained with respect to Fig. 5. After receiving the cell data 32, during the generating first set step 33, at least one ROI is created for each cell location indicated in the cell data 32, together defining the first set of ROIs 35. The generation of the ROIs may be identical to the generation explained with respect to Fig. 5.

After the generation of the first set of ROIs 35, ROI scores 37 are determined during the determining ROI score step 54. The computation of the different ROI scores 37 for the ROIs within the first set 35, may be identical to the computation as explained with respect to Fig. 5. After the computation of the ROI scores 37 for the ROIs in the first set 35, the at least one ROI score 37 is processed along with the first set 35 during a removing ROI step 55. For this, a filtering condition 51 is used, which indicates the condition under which ROIs 18 are removed from the first set 35. For example, the filtering condition 51 may indicate that ROIs 18 with a score 37 less than a predetermined threshold value are to be removed from the first set. After the removal of ROIs 18 from the first set 35, the filtered set 35 is processed during a selection second set step 56. This selection may be conducted as explained with respect to Fig. 5. After the selection of the second set 41, the selected ROIs 18 may be displayed along with the whole slide image 10 on a display apparatus during a displaying step 57.

Fig. 7 illustrates the computation of an area size for an ROI 18. Fig. 7 shows a target cell 24 for which an ROI 18 has been created. The ROI 18 comprises the target cell 24 as well as biomarker positive and biomarker negative cells 12, 13. The ROI 18 is implemented as a polygon 17, which encloses all cells of the ROI 18. In order to determine the area size of the ROI 18, a minimal bounding box 60 is created. The minimal bounding box 60 is the smallest rectangle enclosing all cells of the ROI 18. The area size of the ROI 18 is then determined by determining the length of the diagonal 61 of the bounding box 60. As explained in detail with respect to Fig. 4, the area size of an ROI 18 may be used for the determination of various ROI scores 37.

Fig. 8 shows a flowchart of a method 70 for filtering ROI 18. Thus, the method of Fig. 8 may be combined with the filtering steps as explained with respect to Figs. 5 and 6. Filtering method 70 starts with a determining area size step 71, during which, for each ROI 18 in the first set 35, the respective area size 72 is determined, for example as explained with respect to Fig. 7. In the subsequent comparing area size step 74, the determined area size of one ROI 18 is compared to a threshold value 73. If the determined area size 72 is greater than the threshold value 73, the respective ROI 18 is removed from the first set 35 during the removing step 75. If it is determined that the area size 72 is below the threshold value 73, then the first set 35 is not altered. In other embodiments it is further possible that the comparing area size step 74 tests whether the determined area size 72 lies within a range and therefore compares the area size of an ROI 18 with a lower and an upper bound. In further embodiments it is possible that the determined area size 72 is compared with a minimum area size. The aforementioned embodiments can of course also be combined such that multiple tests for one area size 72 are conducted.

In the next determining remaining ROIs 76 it is determined whether the first set 35 comprises further ROIs 18 which have not been tested. If it is determined that the first set 35 contains more ROIs 18 to be tested, the method continues with the comparing area size step 74 with the next ROI 18 in the first set 35. If it is determined that all ROIs of the first set 35 have been processed, the method 70 finishes and the processing continues, for example, with the selecting of the second set 56, for example of Fig. 6.

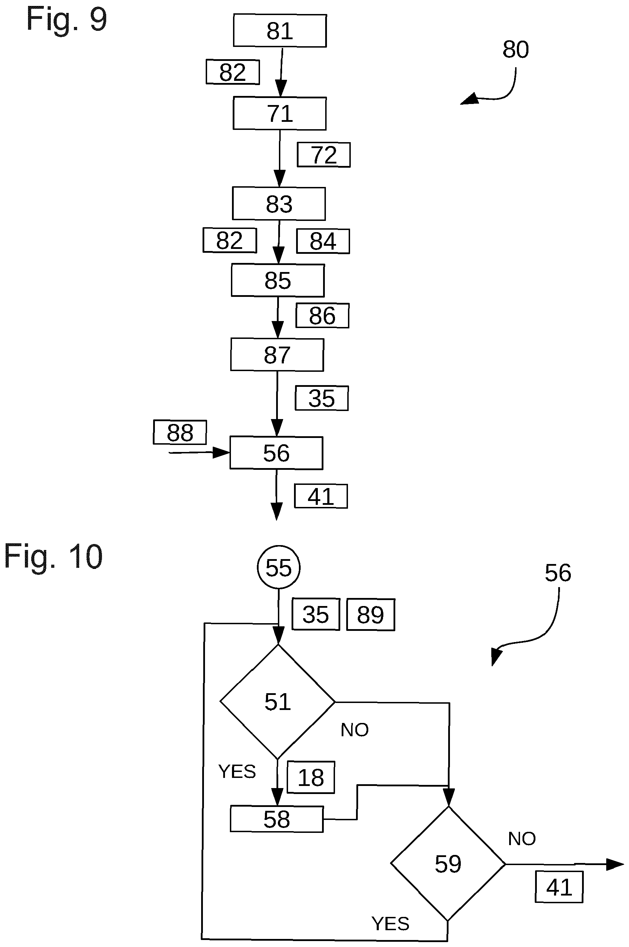

Fig. 9 shows a flowchart illustrating a method for sorting ROIs 80. In the first step of method 80, a determining positivity score step 81 is performed, during which a positivity score 82 for each ROI 18 of the first set 35 is determined. After determining the positivity score 82, a determining area size step 71 is performed, which determines the area size 72 for each ROI 18 for the first set 35. Subsequently, during a determining cell density score step 83, a cell density score 84 is determined for each ROI 18 in the first set 35 using the respectively determined area size 72 of the respective ROI 18.

The positivity score 82 and the cell density score 84 are used during a determining weighted combination step 85 to determine a weighted combination of the cell density score 84 and the respective positivity score 82. This again can be performed for each ROI 18 in the first set 35. Using the weighted combination 86, the ROIs 18 in the first set 35 can be sorted based on the weighted combination 86 during a sorting ROI step 87. For example, the ROIs 18 in the first set 35 can be sorted using a list data structure from highest to lowest weighted combination 86. Of course, other data structures are possible, for example an array, a vector, or a table.

The sorted first set 35 is then further processed during a selecting second set step 56. For this, a predetermined number of ROIs 88 is either predefined or user-selected such that the number of ROIs 18 indicated by the predefined number of ROIs 88 is selected from the first set 35 as the second set 41. The second set 41 may then be output to a user, for example displayed using a display apparatus, for example as explained with respect to Figs. 5 and 6.

Fig. 10 shows a flowchart illustrating the selecting second set step 56 in further detail. After removing of ROIs 18 during the respective step 55, the first set 35 as well as a predetermined score range 89 is provided for a test on a filtering condition 51. During the filtering condition step 51, it is determined whether a ROI 18 of the first step 35 fulfills a filtering condition or not. In the shown embodiment of Fig. 5 it is determined whether the weighted combination of the positivity score 82 and the cell density score 84 lies within the predetermined score range 89. If it is determined that the weighted combination 86 lies within the predetermined score range 89, the respective ROI is selected and added to the second set 41 during the adding ROI to second set step 58. If it is determined that the weighted combination 86 of the respective ROI 18 does not lie within the predetermined score range 89, the respective ROI 18 is not selected.

In the next step, a checking for further ROIs in the first set step 59 checks whether further ROIs 18 are in the first set 35 which need to be processed according to the aforementioned steps. If this is the case, the method continues with the filtering condition step 51 with the next ROI in the first set 35. If it is determined that no further ROIs 18 are in the first set 35, the second set 41 is output for further processing, for example for displaying the second set according to the methods and concepts described with respect to Figs. 5 and 6.

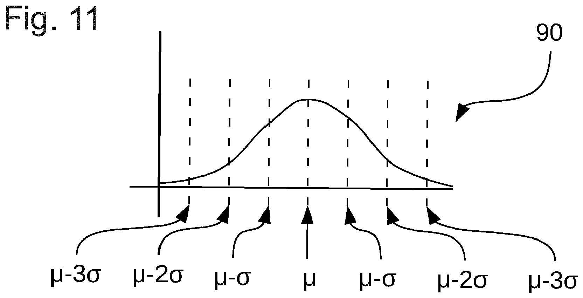

Fig. 11 shows a normal distribution 19 to illustrate the Three Sigma Rule, which may be used as a filtering condition, in particular as a score range 89. The normal distribution 90 models the probability distribution of the scores determined for the ROIs 18 in the first set 35. The Three Sigma Rule stipulates that 99.73 percent of all results, i.e. scores, lie within a Three Sigma interval around the mean of the probability distribution. The sigma refers to the standard deviation. Thus, applying the Three Sigma Rule as a filtering condition ensures that outliers of scores are filtered. For example, ROIs 18 that are very large or very small, are filtered out using the Three Sigma Rule. In alternative embodiments scores outside the first and/or second standard deviation may be filtered out, thereby filtering out more scores and reducing the first set 35 further.

At this point, it should be pointed out all parts described above are to be regarded individually, even without features additionally described in the respective context, even if these have not been explicitly identified individually as optional features in the respective context, e.g. by using "in particular", "preferably", "for example", "e.g.", "possibly", "()" etc., and in combination or any sub combination as independent designs or further developments of the invention as defined in particular in the introduction of the description as well as in the claims.

Reference numerals:

| 10 | digital image/whole slide image |
|----|----|
| 11 | tissue area |
| 12 | biomarker positive tumor cell |
| 13 | biomarker negative tumor cell |
| 14 | Cell center |
| 15 | digital marking tool |
| 16 | marked/labeled whole slide image |
| 18 | Region of interest |
| 19 | Vicinity of tissue border/Crop region |
| 20 | Region of interest table |
| 21 | cell location |
| 22 | Vicinity of target cell |
| 23 | tissue border |
| 24 | Target cell |
| 30 | system |
| 31 | user terminal |
| 32 | cell data |
| 33 | communication unit |
| 34 | ROI generation unit |
| 35 | first set of ROIs |
| 36 | ROI analysis unit |
| 37 | ROI score |
| 38 | ROI filter unit |
| 40 | selection unit |
| 41 | second set of ROIs |
| 50 | computer-implemented method |
| 51 | Filtering condition |
| 52 | Receiving cell data step |
| 53 | Generating first set step |
| 54 | Determining ROI score step |
| 55 | Removing ROIs step |
| 56 | Selecting second set |
| 57 | Displaying step |
| 58 | Adding ROI to second set |
| 59 | Checking for further ROIs in set |
| 60 | Bounding box |
| 61 | Diagonal |
| 70 | Filtering method |
| 71 | Determining are size step |
| 72 | Area size |
| 73 | Threshold value |
| 74 | Comparing area size step |
| 75 | Removing step |
| 76 | Determining remaining ROIs step |
| 80 | Method for sorting ROIs |
| 81 | determining positivity score step |
| 82 | positivity score |
| 83 | determining cell density score step |

84   Cell density score
85   Determining weighted combination step
86   Weighted combination
87   Sorting ROIs step
88   predetermined number of ROIs
89   predetermined score range
90   normal distribution

**Claims**

1. A computer-implemented method for selecting regions of interest, ROIs, in a digital image, in particular in a whole slide image, WSI, for pathological analysis, the method comprising:

   - Receiving cell data indicating the locations of a plurality of cells, in particular of biomarker positive and biomarker negative cells, in the digital image, in particular in the WSI;
   - For each cell location of the plurality of cells, generating at least one ROI, the at least one ROI for each cell together defining a first set of ROIs, each ROI of the first set comprising the cell locations in a predefined vicinity of the respective cell;
   - For each ROI in the first set, determining of at least one ROI score which indicate/s the relevance of the respective ROI;
   - Removing ROIs from the first set which do not fulfill at least one filtering condition;
   - Selecting a second set of ROIs from the first set based on the determined at least one ROI score.

2. The computer-implemented method according to claim 1, **characterized in that** the removing of the ROIs from the first set is based on the at least one ROI score, in particular removing ROIs with at least one ROI score outside a normal distribution according to the three sigma rule.

3. The computer-implemented method according to any of the preceding claims, **characterized by** removing all cell locations from the cell data which are located within a predetermined vicinity, e.g. within less than 10.000 pixels, less than 1.000 pixels, or less than 500 pixels, of a tissue border, in particular prior to the generating of the first set.

4. The computer-implemented method according to any of the preceding claims, **characterized in that** the determining of the at least one ROI score comprises determining a positivity score indicating the fraction of biomarker positive tumor cells compared to a total number of tumor cells in the respective ROI.

5. The computer-implemented method according to any of the preceding claims, **characterized in that** the determining of the at least one ROI score comprises determining an area size of the respective ROI, in particular measured in pixels of the digital image, wherein the area size preferably indicates a diagonal of a bounding box around the respective ROI.

6. The computer-implemented method according to any of the preceding claims, in particular according to claim 5, **characterized by**

   - for each ROI of the first set, comparing the determined area size of the respective ROI with a size threshold value;
   - removing, from the first set, ROIs that have a larger and/or equal area size than the size threshold value.

7. The computer-implemented method according to any of the preceding claims, **characterized in that** the determining of the at least one ROI score comprises determining a cell density score indicating the density of cells in the ROI.

8. The computer-implemented method according to any of the preceding claims, in particular according to claim 7, **characterized in that** the cell density score is determined by calculating

$$1 - \text{area size of the respective ROI}/\max(\text{area size of all ROIs in the first set}).$$

9. The computer-implemented method according to any of the preceding claims, in particular according to claims 4 or 5, **characterized in that** the determining of the at least one ROI score comprises determining a weighted combination of a/the determined positivity score and a/the determined cell density score of the respective ROI, wherein the selecting is based, in particular only, on the weighted combination.

10. The computer-implemented method according to any of the preceding claims, in particular according to claim 6, **characterized by**
sorting the ROIs in the first set according to a/the weighted combination of a/the determined positivity score and a/the determined cell density score of the respective ROI.

11. The computer-implemented method according to any of the preceding claims, **characterized in that**
the selecting of the second set of ROIs from the first set comprises selecting only a predetermined number of ROIs from the first set of ROIs.

12. The computer-implemented method according to any of the preceding claims, **characterized in that**
the selecting of the second set of ROIs from the first set comprises selecting ROIs from the first set where the associated at least one ROI score is within a predetermined score value range.

13. The computer-implemented method according to any of the preceding claims, **characterized in that**
the generating of the at least one ROI for each cell comprises selecting, in particular for each ROI in the first set, N-1 cell locations in the vicinity of the respective cell, in particular wherein N is greater or equal 100, greater or equal 200, greater or equal 300, greater or equal 400, greater or equal 500, or greater or equal 600.

14. The computer-implemented method according to any of the preceding claims, **characterized by**
removing ROIs from the first set based on the at least one ROI score, in particular comprising the step of comparing the respective ROI score with a ROI score threshold value and removing the ROI from the first set if it is determined that the respective ROI score is above or below the ROI score threshold value.

15. The computer-implemented method according to any of the preceding claims, **characterized by**
displaying the second set of ROIs to a user on a display apparatus together with the digital image.

16. The computer-implemented method according to any of the preceding claims, **characterized in that**
the at least one filtering condition indicates removing ROIs

- with at least one identical cell location, and/or
- without biomarker positive cells.

17. Computer-readable medium storing instructions that when executed by at least one processor cause the at least one processor to implement a method according to any of the preceding claims.

18. System for selecting regions of interest, ROIs, in a digital image, in particular in a whole slide image, WSI, for pathological analysis, the system comprising:

- A communication unit adapted for receiving cell data indicating the locations of a plurality of cells, in particular of biomarker positive and biomarker negative cells, in the digital image, in particular in the WSI;
- A ROI generation unit adapted to, for each cell location of the digital image, generating at least one ROI, the at least one ROI for each cell together defining a first set of ROIs, each ROI of the first set comprising the cell locations in a predefined vicinity of the respective cell;
- A ROI analysis unit adapted to, for each ROI in the first set, to determine at least one ROI score, the at least one ROI score indicating the relevance of the respective ROI;
- a ROI filter unit adapted to remove ROIs from the first set which do not fulfill at least one filtering condition;
- a selection unit adapted to select a second set of ROIs from the first set based on the determined at least one ROI score.

Fig. 1

Fig. 2

## Fig. 3

## Fig. 4

| Id | Cell density score | Positivity score | Size |
|----|--------------------|------------------|------|
| 1  | 0.4                | 0.8              | 2000 |
| 2  | 0.6                | 0.7              | 3000 |
| 3  | 0.2                | 0.3              | 10000 |

## Fig. 5

## Fig. 6

Fig. 7

24    60

61

18    13

12

Fig. 8

71

72    73    35

70

74

YES

NO

75

76    NO

35

YES

Fig. 9

```
        ┌──────────┐
        │    81    │
        └──────────┘
  ┌────┐      │
  │ 82 │      ▼
  └────┘ ┌──────────┐
        │    71    │
        └──────────┘
             │  ┌────┐
             │  │ 72 │
             ▼  └────┘
        ┌──────────┐
        │    83    │
        └──────────┘
  ┌────┐    │   ┌────┐
  │ 82 │    │   │ 84 │
  └────┘    ▼   └────┘
        ┌──────────┐
        │    85    │
        └──────────┘
             │  ┌────┐
             │  │ 86 │
             ▼  └────┘
        ┌──────────┐
        │    87    │
        └──────────┘
             │  ┌────┐
             │  │ 35 │
             ▼  └────┘
┌────┐  ┌──────────┐
│ 88 │─▶│    56    │
└────┘  └──────────┘
             │  ┌────┐
             │  │ 41 │
             ▼  └────┘
```

80

Fig. 10

```
            ( 55 )
              │  ┌────┐ ┌────┐
              │  │ 35 │ │ 89 │
              ▼  └────┘ └────┘
            ◇
          ╱   ╲
         ╱  51  ╲────── NO ──────┐
         ╲      ╱                │
          ╲   ╱   NO             │
    YES    ◇                     │
     │   ┌────┐                  │
     │   │ 18 │                  │
     ▼   └────┘                  │
  ┌──────────┐                   │
  │    58    │──────────┐        │
  └──────────┘          ▼        ▼
                        ◇
                      ╱   ╲
                     ╱ 59  ╲── NO ──▶
                     ╲     ╱   ┌────┐
                      ╲   ╱    │ 41 │
                       ◇       └────┘
                     YES
```

56

Fig. 11

90

μ-3σ    μ-2σ    μ-σ    μ    μ-σ    μ-2σ    μ-3σ

Europäisches
Patentamt

European
Patent Office

Office européen
des brevets

# EUROPEAN SEARCH REPORT

Application Number

EP 23 15 3603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG JUNKANG ET AL: "Cancer Cells Detection in Phase-Contrast Microscopy Images Based on Faster R-CNN", 2016 9TH INTERNATIONAL SYMPOSIUM ON COMPUTATIONAL INTELLIGENCE AND DESIGN (ISCID), IEEE, vol. 1, 10 December 2016 (2016-12-10), pages 363-367, XP033049877, DOI: 10.1109/ISCID.2016.1090 [retrieved on 2017-01-23] * Sections III and IV; figures 2-4 * | 1-18 | INV. G06V10/25 G06V20/69 |
| X | SUN YIBAO ET AL: "SRPN: similarity-based region proposal networks for nuclei and cells detection in histology images", MEDICAL IMAGE ANALYSIS, OXFORD UNIVERSITY PRESS, OXOFRD, GB, vol. 72, 21 June 2021 (2021-06-21), XP086702600, ISSN: 1361-8415, DOI: 10.1016/J.MEDIA.2021.102142 [retrieved on 2021-06-21] * Section III-A; figure 3 * | 1-18 | |
| X | US 2015/110387 A1 (LIENHART RAINER [DE] ET AL) 23 April 2015 (2015-04-23) * paragraphs [0123] - [0140]; figure 1 * | 1-18 | |

TECHNICAL FIELDS SEARCHED (IPC)

G06V

The present search report has been drawn up for all claims

| Place of search | Date of completion of the search | Examiner |
|---|---|---|
| The Hague | 2 June 2023 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 3603

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2023

| Patent document cited in search report | | Publication date | Patent family member(s) | Publication date |
|---|---|---|---|---|
| US 2015110387 | A1 | 23-04-2015 | CA 2871512 A1 | 31-10-2013 |
| | | | EP 2657857 A1 | 30-10-2013 |
| | | | US 2015110387 A1 | 23-04-2015 |
| | | | WO 2013160192 A1 | 31-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22192410 A